# EUROPÄISCHE PATENTANMELDUNG

(11) **EP 4 609 954 A1**
(43) Veröffentlichungstag der Anmeldung: **03.09.2025**
(21) Anmeldenummer: 24159891.1
(22) Anmeldetag: 27.02.2024
(51) Int. Cl.: B02C 25/00, G06V 10/82

(54) **VERFAHREN ZUM BETRIEB EINER MATERIALZERKLEINERUNGSANLAGE**

(71) Anmelder: HAZEMAG & EPR GmbH, 48249 Dülmen (DE)
(72) Erfinder: WIRTH, Hendrik, 48249 Dülmen (DE)
(74) Vertreter: Zenz Patentanwälte Partnerschaft mbB

(57) **Zusammenfassung**

Die Erfindung betrifft ein Verfahren zum Betrieb einer Materialzerkleinerungsanlage, welche wenigstens ein Zerkleinerungsaggregat, welchem zu zerkleinerndes Material kontinuierlich zugeführt wird, und wenigstens ein Förderband, von welchem das von dem wenigstens einen Zerkleinerungsaggregat zerkleinerte Material wegtransportiert wird, aufweist. Bei dem Verfahren wird eine Bildaufnahme von dem zerkleinerten Material auf dem Förderband mit Hilfe eines optischen Analysesystems erstellt. Anschließend wird die erstellte Bildaufnahme analysiert, wobei beim Analysieren geometrische Eigenschaften des zerkleinerten Materials ermittelt werden und eine aktuelle Materialverteilung von unterschiedlichen Materialgrößen in dem zerkleinerten Material anhand der ermittelten geometrischen Eigenschaften mit Hilfe des optischen Analysesystems berechnet wird. Dann wird eine Abweichung zwischen der berechneten und aktuellen Materialverteilung und einer von einem Bediener vorgegebenen Soll-Materialverteilung mit Hilfe des optischen Analysesystems berechnet, wobei dann wenigstens ein Betriebsparameter des Zerkleinerungsaggregates im laufenden Betrieb der Materialzerkleinerungsanlage mit Hilfe des optischen Analysesystems autonom verstellt wird, wenn die berechnete Abweichung für einen festgelegten Zeitraum außerhalb eines vorgegebenen Toleranzbereichs liegt.

## Beschreibung

Die Erfindung betrifft ein Verfahren zum Betrieb einer Materialzerkleinerungsanlage, wobei die Materialzerkleinerungsanlage wenigstens ein Zerkleinerungsaggregat, welchem zu zerkleinerndes Material kontinuierlich zugeführt wird, und wenigstens ein Förderband, von welchem das von dem wenigstens einen Zerkleinerungsaggregat zerkleinerte Material wegtransportiert wird, aufweist.

Moderne Materialzerkleinerungsanlagen sind häufig mit fortschrittlichen Steuerungssystemen ausgestattet, welche eine präzise Steuerung des Zerkleinerungsprozesses hinsichtlich der der Einstellung der Zerkleinerungsintensität und der Überwachung der Materialzufuhr ermöglichen. Derartige Steuerungssysteme sammeln Daten von verschiedenen Sensoren der Materialzerkleinerungsanlage und erleichtern einem Bediener die Überwachung der Materialzerkleinerungsanlage und eine mögliche Anpassung von Betriebsparametern der Materialzerkleinerungsanlage, wenn das System dem Bediener Abweichungen von gewünschten Sollwerten meldet.

Der Erfindung liegt die Aufgabe zugrunde, eine Lösung zu schaffen, die auf konstruktiv einfache Weise eine Optimierung des Zerkleinerungsprozesses einer Materialzerkleinerungsanlage bereitstellt.

Diese Aufgabe wird erfindungsgemäß gelöst durch ein Verfahren mit den Merkmalen gemäß dem Patentanspruch 1.

Das erfindungsgemäße Verfahren zum Betrieb einer Materialzerkleinerungsanlage, welche wenigstens ein Zerkleinerungsaggregat, welchem zu zerkleinerndes Material kontinuierlich zugeführt wird, und wenigstens ein Förderband aufweist, von welchem das von dem wenigstens einen Zerkleinerungsaggregat zerkleinerte Material wegtransportiert wird, weist die nachfolgenden Schritte auf:
- Erstellen einer Bildaufnahme von dem zerkleinerten Material auf dem Förderband mit Hilfe eines optischen Analysesystems,
- Analysieren der erstellten Bildaufnahme, wobei beim Analysieren geometrische Eigenschaften des zerkleinerten Materials ermittelt werden und eine aktuelle Materialverteilung von unterschiedlichen Materialgrößen in dem zerkleinerten Material anhand der ermittelten geometrischen Eigenschaften mit Hilfe des optischen Analysesystems berechnet wird,
- Berechnung einer Abweichung zwischen der berechneten und aktuellen Materialverteilung und einer von einem Bediener vorgegebenen Soll-Materialverteilung mit Hilfe des optischen Analysesystems, und
- autonomes Verstellen von wenigstens einem Betriebsparameter des Zerkleinerungsaggregates im laufenden Betrieb der Materialzerkleinerungsanlage mit Hilfe des optischen Analysesystems, wenn die berechnete Abweichung für einen festgelegten Zeitraum außerhalb eines vorgegebenen Toleranzbereichs liegt.

Vorteilhafte und zweckmäßige Ausgestaltungen und Weiterbildungen der Erfindung ergeben sich aus den entsprechenden Unteransprüchen.

Durch die Erfindung wird ein Verfahren zum Betrieb einer Materialzerkleinerungsanlage bereitgestellt, wobei sich das Verfahren durch eine Optimierung der Zerkleinerungsprozesse durch präzise Analyse und Anpassung von Betriebsparametern auszeichnet, um eine konstante Produktqualität zu gewährleisten. Dabei werden bei dem erfindungsgemäßen Verfahren unter anderem geometrische Eigenschaften des zerkleinerten Materials sowie daraus resultierende mathematische Abhängigkeiten analysiert und verglichen. Weichen die analysierten Werte des zerkleinerten Materials von Soll-Vorgaben über eine festgelegte geometrische Abweichung hinaus und über einen festgelegten Zeitraum hinaus ab, so ist das erfindungsgemäße Verfahren selbstständig in der Lage, Betriebsparameter Zerkleinerungsaggregates schrittweise autonom nachzujustieren, um eigenständig die Soll-Vorgaben wieder zu erreichen. Die Anpassung dieser Betriebsparameter läuft dabei im laufenden Produktionsbetrieb der Brechanlage ab. Erfindungsgemäß ist folglich ein Eingreifen eines Bedieners der Materialzerkleinerungsanlage nicht mehr erforderlich. Wesentlich bei der Erfindung ist die Integration eines optischen Analysesystems, das für die Überwachung und Steuerung des Zerkleinerungsprozesses zuständig ist. Dieses optische Analysesystem ist in der Lage, Bildaufnahmen des zerkleinerten Materials auf dem Förderband zu erstellen und diese Aufnahmen detailliert zu analysieren. Die Analyse umfasst die Ermittlung geometrischer Eigenschaften des zerkleinerten Materials und die Berechnung der aktuellen Materialverteilung basierend auf diesen Eigenschaften. Diese Informationen werden genutzt, um eine Abweichung zwischen der aktuellen und einer vom Bediener vorgegebenen Soll-Materialverteilung zu berechnen. Erfindungsgemäß überwacht das optische Analysesystem die aktuelle Materialverteilung, wohingegen der Bediener lediglich die zu erzielende Soll-Materialverteilung vorgibt.

Hinsichtlich der autonomen Verstellung von wenigstens einem Betriebsparameter der Materialzerkleinerungsanlage ist es in Ausgestaltung der Erfindung von Vorteil, wenn beim Analysieren die erstellte Bildaufnahme in ein neuronales Netzwerk eingegeben wird und die geometrischen Eigenschaften des zerkleinerten Materials mit Hilfe des neuronalen Netzwerks ermittelt werden. Das neuronale Netzwerk ist dabei in der Lage, Vorhersagen über den Zustand der Materialzerkleinerungsanlage zu treffen und automatisierte Entscheidungen zur Prozessoptimierung zu treffen. Dieses neuronale Netzwerk kann vor Inbetriebnahme der Anlage mit vergleichbaren oder identischen Materialdatensätzen trainiert und/oder während des Betriebs oder in Testphasen mit Referenzdatensätzen aktualisiert werden. Durch diese Technologie wird die Genauigkeit der Materialanalyse erheblich verbessert. Für neuronale Netzwerke gibt es vorbereitete programmiertechnische Hilfsmittel und entsprechende Software, die wesentliche Verarbeitungsschritte des neuronalen Netzwerkes abbilden. Diese Software ist derart vorgefertigt, dass mit geringem Programmieraufwand ein neuronales Netzwerk angepasst, parametrisiert und trainiert werden kann. Bei dem erfindungsgemäßen Verfahren zum Betrieb einer Materialzerkleinerungsanlage kommt eine statische Software zum Einsatz, welche keine Veränderungen zur Laufzeit durchführt oder erlaubt, weil die Aspekte Vorhersagbarkeit, Zuverlässigkeit und Sicherheit wichtig sind und unerwartete Änderungen zu Fehlern oder Sicherheitslücken führen könnten.

Gemäß einer Ausgestaltung des erfindungsgemäßen Verfahrens ist vorgesehen, dass ein Convolutional Neural Network (CNN) als das neuronale Netzwerk verwendet wird. Bei dem Convolutional Neural Network (CNN) handelt es sich um eine besondere Gruppe der computerbasierten neuronalen Netzwerke, welche besonders effektiv in der Verarbeitung von Daten mit einer bekannten Topologie sind, wie zum Beispiel Bildaufnahmen, welche als 2D-Gitter von Pixeln betrachtet werden können. Die Architektur eines CNN ist speziell darauf ausgelegt, die starken räumlichen Korrelationen in visuellen Daten zu nutzen. Ein CNN besteht typischerweise aus einer Abfolge von Schichten (Faltungsschichten, Pooling-Schichten, vollständig verbundene Schichten, Aktivierungsfunktionen), welche verschiedene Arten von Operationen ausführen. Durch das Training lernen Filter in den Faltungsschichten, ohne explizite Programmierung, nützliche visuelle Merkmale zu extrahieren, und die vollständig verbundenen Schichten lernen, diese Merkmale zur Durchführung spezifischer Aufgaben, wie zum Beispiel der Klassifizierung, zu nutzen.

Von Vorteil ist es in weiterer Ausgestaltung des erfindungsgemäßen Verfahrens, wenn vor einer Inbetriebnahme der Materialzerkleinerungsanlage das neuronale Netzwerk mit Datensätzen aus analysierten Bildaufnahmen eines Materials, welches vergleichbar oder gleich zu dem zu zerkleinernden Material ist, angelernt wird. Diese Datensätze entsprechen Trainingsdatensätzen, welche neben der optischen Bildanalyse weitere Betriebsdaten der Materialzerkleinerungsanlage enthalten, welche über einen langen und störungsfreien Betrieb für eine bestimmte Materialsorte aufgezeichnet wurden, so dass anhand dieser Trainingsdaten das neuronale Netzwerk in der Lage ist zu erkennen, ob beispielsweise ein von dem gewünschten Material abweichendes Material dem Zerkleinerungsaggregat zugeführt wird und/oder welcher Grad an Verschleiß des Zerkleinerungsaggregates vorliegt, wobei das neuronale Netzwerk dann in der Lage ist, das Zerkleinerungsaggregat entsprechend dem abweichenden Material autonom und ohne Eingriff eines Bedieners anzupassen und für eine gewünschte Zerkleinerung zu sorgen und/oder Spaltweiten des Zerkleinerungsaggregats entsprechend des festgestellten Verschleißes autonom und ohne Eingriff eines Bedieners nachzujustieren.

Die Erfindung sieht in weiterer Ausgestaltung vor, dass während des Betriebs oder während eines Testbetriebs der Materialzerkleinerungsanlage das neuronale Netzwerk mit einem Referenzdatensatz versorgt wird, wobei für den Referenzdatensatz von einem Bediener eine Probe des zerkleinerten Materials von dem Förderband entnommen wird und von dem Bediener die Probe analysiert wird.

In einer Ausgestaltung des erfindungsgemäßen Verfahrens ist ferner vorgesehen, dass beim Analysieren Bereiche von zerkleinertem Material in der erstellten Bildaufnahme identifiziert werden und für jeden identifizierten Bereich mit zerkleinertem Material in der erstellten Bildaufnahme eine zugehörige Kubizität bestimmt wird.

Um eine hohe Reaktionsgeschwindigkeit und Aktualität der Prozesssteuerung zu gewährleisten, sieht die Erfindung in weiterer Ausgestaltung des Verfahrens vor, dass wenigstens fünf Bildaufnahmen pro Minute erstellt und analysiert werden.

Um eine Verfälschung des Ergebnisses der Analyse aufgrund einer Entmischung des zerkleinerten Materials zu vermeiden, ist in einer weiteren Ausgestaltung der Erfindung vorgesehen, dass beim Berechnen der aktuellen Materialverteilung ein Korrekturfaktor für Förderweg des zerkleinerten Materials, welcher sich von dem Zerkleinerungsaggregat über das Förderband bis zu der Position der Bildaufnahme erstreckt, berücksichtigt wird.

Hinsichtlich einer Erzielung einer konstanten Produktqualität sieht die Erfindung ferner vor, dass bei dem autonomen Verstellen im laufenden Betrieb eine Spaltweite und/oder eine Rotordrehzahl des Zerkleinerungsaggregat derart schrittweise geregelt verstellt wird, bis die berechnete Abweichung innerhalb des vorgegebenen Toleranzbereichs liegt.

Schließlich ist in weiterer Ausgestaltung des Verfahrens vorgesehen, dass die Ergebnisse der Analyse des optischen Analysesystems an ein Maschinenpult der Materialzerkleinerungsanlage und/oder an ein dezentrales Datenbanksystem und/oder an ein dezentrales Visualisierungssystem versendet werden. Das optische Analysesystem ist folglich in der Lage, die Ergebnisse der Analyse dahingehend zusammenzufassen und darzustellen, dass quantifizierbare Aussagen über die Qualität, die geometrischen und volumetrischen Eigenschaften des zerkleinerten Materials getroffen werden können. Die Ergebnisse und Aussagen können als Informationen in Datenbank- oder Visualisierungssystem dezentral gespeichert, abgerufen und dargestellt werden.

Es versteht sich, dass die vorstehend genannten Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert. Weitere Einzelheiten, Merkmale und Vorteile des Gegenstandes der Erfindung ergeben sich aus der nachfolgenden Beschreibung.

Die Erfindung richtet sich auf ein Verfahren zum Betrieb einer Materialzerkleinerungsanlage mittels einer optischen Analysesystems. Die Materialzerkleinerungsanlage weist wenigstens ein Zerkleinerungsaggregat, welchem zu zerkleinerndes Material kontinuierlich zugeführt wird, und wenigstens ein Förderband auf, von welchem das von dem wenigstens einen Zerkleinerungsaggregat zerkleinerte Material wegtransportiert wird. Mit Hilfe des Verfahrens kann erfindungsgemäß wenigstens ein Betriebsparameter des wenigstens einen Zerkleinerungsaggregates autonom geregelt werden. Das wenigstens eine Zerkleinerungsaggregat kann zum Beispiel ein Prallbrecher, ein Hammerbrecher, ein Kegelbrecher, ein Backenbrecher, ein Walzenbrecher, ein Sizer oder ein beliebig anderer Brecher zum Zerkleinern von Material, wie zum Beispiel mineralischen Rohstoffen, sein.

Bei dem erfindungsgemäßen Verfahren wird das aus dem Zerkleinerungsaggregat austretende und gebrochene bzw. zerkleinerte Material mit Hilfe eines optischen Analysesystems aufgenommen, verarbeitet und analysiert, um dieses Analyseergebnis gegen Soll-Werte zu vergleichen, die dem System durch einen Bediener der Materialzerkleinerungsanlage eigegeben werden können. Entsprechend wird bei dem erfindungsgemäßen Verfahren mit Hilfe des optischen Analysesystems in einem Verfahrensschritt eine Bildaufnahme von dem zerkleinerten Material auf dem Förderband erstellt. Das optische Analysesystem weist eine Kameravorrichtung auf, von welcher die Bildaufnahme erstellt wird. Bei der Bildaufnahme handelt es sich dann um eine Aufnahme in Draufsicht auf das Förderband, auf welchem das zerkleinerte Material transportiert wird. In einem weiteren Schritt wird dann die erstellte Bildaufnahme von dem optischen Analysesystems analysiert. Beim Analysieren werden unter anderem geometrische Eigenschaften zerkleinerten Materials ermittelt. Dabei werden von dem optischen Analysesystem in der Bildaufnahme die Umrisse als Bereiche von zerkleinertem Material bestimmt und identifiziert. Anhand der Umrisse wird dann für jeden erkannten Umriss ein Viereck bestimmt, welches den jeweiligen Umriss ergibt, so dass Anhand des Vierecks die jeweiligen Längen und Breiten für das zerkleinerte Material von dem optischen Analysesystem bestimmt werden können. Auf diese Weise wird von dem optischen Analysesystem für jeden identifizierten Bereich mit einem zerkleinerten Material in der erstellten Bildaufnahme eine zugehörige Kubizität bestimmt. Die detaillierte Analyse durch Identifizierung spezifischer Bereiche und Bestimmung der Kubizität ermöglicht eine noch präzisere Steuerung des Zerkleinerungsprozesses.

Ferner wird mit Hilfe des optischen Analysesystems anhand der ermittelten geometrischen Eigenschaften, welche aus der erstellten Bildaufnahme für das zerkleinerte Material bestimmt wurden, eine aktuelle Materialverteilung von unterschiedlichen Materialgrößen in dem zerkleinerten Material berechnet. Die Materialverteilung beschreibt die Spannweite der Partikelgrößen, die in dem zerkleinerten Material von den kleinsten bis zu den größten Partikeln vorhanden sind, und wird als Kornband bezeichnet. Für eine kontinuierliche und aktuelle Information hinsichtlich der Materialverteilung bzw. des Kornbandes werden wenigstens fünf Bildaufnahmen pro Minute erstellt und analysiert.

Die Bestimmung der geometrischen Eigenschaften aus der erstellten Bildaufnahme kann durch eine KI-gestützte Analyse erfolgen. Beispielsweise kann beim Analysieren die erstellte Bildaufnahme in ein neuronales Netzwerk eingegeben werden. Mit Hilfe des neuronalen Netzwerks werden dann die geometrischen Eigenschaften des zerkleinerten Materials ermittelt. Zu diesem Zweck kann beispielsweise ein Convolutional Neural Network (CNN) als das neuronale Netzwerk verwendet werden. Unabhängig davon, welche Art von neuronalem Netzwerk verwendet wird, kann vor einer Inbetriebnahme der Materialzerkleinerungsanlage das neuronale Netzwerk mit Datensätzen aus analysierten Bildaufnahmen eines Materials, welches vergleichbar oder gleich zu dem zu zerkleinernden Material ist, angelernt werden. Denkbar ist es ferner, dass während des Betriebs oder während eines Testbetriebs der Materialzerkleinerungsanlage das neuronale Netzwerk mit einem Referenzdatensatz versorgt wird, wobei für den Referenzdatensatz von einem Bediener eine Probe des zerkleinerten Materials von dem Förderband entnommen wird und von dem Bediener die Probe analysiert wird.

Nach dem Verfahrensschritt des Analysierens der erstellten Bildaufnahme folgt mit Hilfe des optischen Analysesystems der Verfahrensschritt des Berechnens einer Abweichung zwischen der berechneten und aktuellen Materialverteilung und einer von einem Bediener vorgegebenen Soll-Materialverteilung. Bei diesem Verfahrensschritt wird folglich die berechnete und aktuelle Materialverteilung, also das Kornband, mit einer von einem Bediener der Materialzerkleinerungsanlage vorgegebenen Soll-Materialverteilung verglichen.

Bei dem Berechnen der Abweichung bzw. bei dem Vergleichen der aktuellen Materialverteilung und der vorgegebenen Soll-Materialverteilung kann beim Berechnen der aktuellen Materialverteilung ein Korrekturfaktor für den Förderweg des zerkleinerten Materials, welcher sich von dem Zerkleinerungsaggregat bis zu der Position der Bildaufnahme erstreckt, berücksichtigt werden. Dieser Korrekturfaktor berücksichtigt eine Entmischung des zerkleinerten Materials entlang des Förderweges auf dem Förderband, bei welcher sich die Partikel des zerkleinerten Materials nach Größe, Form oder Dichte sortieren oder segregieren, anstatt eine gleichmäßige Mischung zu bilden.

Weicht die aus dem Analysieren hervorgegangene und berechnete Materialverteilung des aktuell zerkleinerten Materials von der Soll-Materialverteilung für einen festgelegten Zeitraum und um einen vorgegebenen Toleranzbereich ab, so folgt der Verfahrensschritt des autonomen Verstellens von wenigstens einem Betriebsparameter des Zerkleinerungsaggregates im laufenden Betrieb der Materialzerkleinerungsanlage mit Hilfe des optischen Analysesystems. Das erfindungsgemäße Verfahren ist selbstständig in der Lage, die Betriebsparameter des Zerkleinerungsaggregates, wie zum Beispiel Spaltweiten und/oder Geschwindigkeiten, Rotordrehzahl, schrittweise autonom nachzujustieren, um eigenständig die Soll-Vorgaben in Form der Soll-Materialverteilung wieder zu erreichen. Die Anpassung dieser Betriebsparameter läuft dabei im laufenden Produktionsbetrieb der Materialzerkleinerungsanlage ab, wenn die berechnete Abweichung für einen festgelegten Zeitraum außerhalb eines vorgegebenen Toleranzbereichs liegt

Die Ergebnisse der Analyse des optischen Analysesystems können an ein Maschinenpult der Materialzerkleinerungsanlage und/oder an ein dezentrales Datenbanksystem und/oder an ein dezentrales Visualisierungssystem versendet werden. Dadurch ist es möglich, die gemessenen bzw. ermittelten und berechneten Ergebnisse dahingehend zusammenzufassen und darzustellen, dass quantifizierbare Aussagen über die Qualität, die geometrischen und volumetrischen Eigenschaften des Brechproduktes getroffen werden können. Diese Informationen können im Datenbank- und Visualisierungssystem der Erfindung und auch in anderen Datenbank- oder Visualisierungssystemen gespeichert, abgerufen und dargestellt werden. Ferner erlauben die Ergebnisse der Analyse des optischen Analysesystems Rückschlüsse auf den Verschleiß des Zerkleinerungsaggregates und Rückschlüsse dahingehend, ob dem Zerkleinerungsaggregat zwischenzeitlich ein anderes Material zum Zerkleinern zugeführt wird oder wurde. Anhand der Rückschlüsse kann dann von dem optischen Analysesystem eine Änderung von sogenannten Rezepten (vorgegebene Spaltweiten des Zerkleinerungsaggregates bei einem bestimmten und zu zerkleinernden Material) und/oder eine Änderung der Rotorgeschwindigkeit ohne Eingriff eines Bedieners erfolgen, um sich entweder dem Verschleiß des Zerkleinerungsaggregates und/oder einem geänderten Material autonom anzupassen.

Zusammengefasst ermöglicht die Erfindung eine effiziente und präzise Steuerung von Materialzerkleinerungsanlagen durch ein optisches Analysesystem, welches eine KI-gestützte Analyse des zerkleinerten Materials durchführt. Das erfindungsgemäße Verfahren besitzt die Fähigkeit, autonom Betriebsparameter des Zerkleinerungsaggregats anzupassen, falls die festgestellte Abweichung für einen bestimmten Zeitraum außerhalb eines definierten Toleranzbereichs liegt. Dies ermöglicht eine kontinuierliche Optimierung des Zerkleinerungsprozesses und gewährleistet eine gleichbleibend hohe Produktqualität. Der Bediener der Materialzerkleinerungsanlage muss lediglich das Zielprodukt vorgeben, ohne manuelle Einstellungen an der Materialzerkleinerungsanlage vornehmen zu müssen. Durch die Erfindung wird folglich die Genauigkeit, Effizienz und Flexibilität des Betriebs von Materialzerkleinerungsanlagen durch den Einsatz modernster Technologien erheblich gesteigert.

Die vorstehend beschriebene Erfindung ist selbstverständlich nicht auf die beschriebene Ausführungsform beschränkt. Es ist ersichtlich, dass zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten ist.

## Patentansprüche

1. Verfahren zum Betrieb einer Materialzerkleinerungsanlage, wobei die Materialzerkleinerungsanlage wenigstens ein Zerkleinerungsaggregat, welchem zu zerkleinerndes Material kontinuierlich zugeführt wird, und wenigstens ein Förderband, von welchem das von dem wenigstens einen Zerkleinerungsaggregat zerkleinerte Material wegtransportiert wird, aufweist, wobei das Verfahren die Schritte aufweist:
- Erstellen einer Bildaufnahme von dem zerkleinerten Material auf dem Förderband mit Hilfe eines optischen Analysesystems,
- Analysieren der erstellten Bildaufnahme, wobei beim Analysieren geometrische Eigenschaften des zerkleinerten Materials ermittelt werden und eine aktuelle Materialverteilung von unterschiedlichen Materialgrößen in dem zerkleinerten Material anhand der ermittelten geometrischen Eigenschaften mit Hilfe des optischen Analysesystems berechnet wird,
- Berechnen einer Abweichung zwischen der berechneten und aktuellen Materialverteilung und einer von einem Bediener vorgegebenen Soll-Materialverteilung mit Hilfe des optischen Analysesystems, und
- autonomes Verstellen von wenigstens einem Betriebsparameter des Zerkleinerungsaggregates im laufenden Betrieb der Materialzerkleinerungsanlage mit Hilfe des optischen Analysesystems, wenn die berechnete Abweichung für einen festgelegten Zeitraum außerhalb eines vorgegebenen Toleranzbereichs liegt.

2. Verfahren nach Anspruch 1, wobei beim Analysieren die erstellte Bildaufnahme in ein neuronales Netzwerk eingegeben wird und die geometrischen Eigenschaften des zerkleinerten Materials mit Hilfe des neuronalen Netzwerks ermittelt werden.

3. Verfahren nach Anspruch 2, wobei ein Convolutional Neural Network (CNN) als das neuronale Netzwerk verwendet wird.

4. Verfahren nach Anspruch 2 oder 3, wobei vor einer Inbetriebnahme der Materialzerkleinerungsanlage das neuronale Netzwerk mit Datensätzen aus analysierten Bildaufnahmen eines Materials, welches vergleichbar oder gleich zu dem zu zerkleinernden Material ist, angelernt wird.

5. Verfahren nach einem der Ansprüche 2 bis 4, wobei während des Betriebs oder während eines Testbetriebs der Materialzerkleinerungsanlage das neuronale Netzwerk mit einem Referenzdatensatz versorgt wird, wobei für den Referenzdatensatz von einem Bediener eine Probe des zerkleinerten Materials von dem Förderband entnommen wird und von dem Bediener die Probe analysiert wird.

6. Verfahren nach einem der Ansprüche 2 bis 5, wobei beim Analysieren Bereiche von zerkleinertem Material in der erstellten Bildaufnahme identifiziert werden und für jeden identifizierten Bereich mit zerkleinertem Material in der erstellten Bildaufnahme eine zugehörige Kubizität bestimmt wird.

7. Verfahren nach einem der vorhergehenden Ansprüche, wobei wenigstens fünf 5 Bildaufnahmen pro Minute erstellt und analysiert werden.

8. Verfahren nach einem der vorhergehenden Ansprüche, wobei beim Berechnen der aktuellen Materialverteilung ein Korrekturfaktor für Förderweg des zerkleinerten Materials, welcher sich von dem Zerkleinerungsaggregat bis zu der Position der Bildaufnahme erstreckt, berücksichtigt wird.

9. Verfahren nach einem der vorhergehenden Ansprüche, wobei bei dem autonomen Verstellen im laufenden Betrieb eine Spaltweite und/oder eine Rotordrehzahl des Zerkleinerungsaggregat derart schrittweise geregelt verstellt wird, bis die berechnete Abweichung innerhalb des vorgegebenen Toleranzbereichs liegt.

10. Verfahren nach einem der vorhergehenden Ansprüche, wobei die Ergebnisse der Analyse des optischen Analysesystems an ein Maschinenpult der Materialzerkleinerungsanlage und/oder an ein dezentrales Datenbanksystem und/oder an ein dezentrales Visualisierungssystem versendet werden.
